# EUROPÄISCHE PATENTSCHRIFT

(11) **EP 2 199 012 B1**
(45) Veröffentlichungstag und Bekanntmachung des Hinweises auf die Patenterteilung: **23.09.2015**
(21) Anmeldenummer: 09015032.7
(22) Anmeldetag: 04.12.2009
(51) Int. Cl.: B23Q 1/01, B23B 3/16

(54) **Werkzeugmaschine zur Bearbeitung eines rohrförmigen Werkstücks**
Machine tool for processing a tubular workpiece
Machine-outil pour l'usinage d'une pièce tubulaire

(30) Priorität: 17.12.2008 DE 102008062401; 19.11.2009 DE 102009053679
(43) Veröffentlichungstag der Anmeldung: 23.06.2010
(73) Patentinhaber: SMS Meer GmbH, 41069 Mönchengladbach (DE)
(72) Erfinder: Esser, Karl-Josef, 41179 Mönchengladbach (DE)
(74) Vertreter: Grosse, Wolf-Dietrich Rüdiger

(56) Entgegenhaltungen:
- EP-A1- 2 058 071
- DE-A1- 3 320 655
- DE-A1- 4 136 916
- DE-C- 223 948
- GB-A- 825 168
- GB-A- 1 337 179
- US-A- 4 700 442
- US-A- 4 719 676
- US-A1- 2007 033 786

## Beschreibung

Die Erfindung betrifft eine Werkzeugmaschine zur Bearbeitung eines rohrförmigen Werkstücks mit den im Oberbegriff des unabhängigen Anspruchs angegebenen Merkmalen. Eine derartige Werkzeugmaschine ist aus dem Dokument DE 33 20 655 A1 bekannt.

Werkzeugmaschinen der genannten Art sind in verschiedensten Varianten bekannt, z. B. aus DE 223948 C, GB 1 337 179 A, DE 41 36 916 A1, DE 33 20 655 A1 sowie US 4 719 676 A, und werden eingesetzt, um rohrförmige Werkstücke an ihrem Außen- und Innenumfang sowie an ihrer Stirnseite bearbeiten zu können, d. h. das Rohrende wird einer spanenden Bearbeitung unterzogen. Hierunter sind generell beliebige Andrehungen zu verstehen und insbesondere auch die Einbringung von Innen- und Außengewinden. Hierfür kann das rohrförmige Werkstück in einer Werkstückspindel gespannt werden. Die Bearbeitung erfolgt dann durch Heranführen von Werkzeugen an das Werkstück, wobei mehrere Werkzeuge von jeweils einem Revolverkopf gehalten werden. Die Drehachsen der Werkstückspindel und der Revolverköpfe sind dabei senkrecht horizontal zueinander angeordnet. Dabei ist es generell möglich, dass sich das Werkstück, d. h. das rohrförmige zu bearbeitende Bauteil, dreht und die Werkzeuge stillstehen; genauso können auch die Werkzeuge rotieren und das stillstehende Werkstück bearbeiten. In letzterem Falle dreht die Werkstückspindel das Werkstück lediglich so, dass es bei der spanenden Bearbeitung in der richtigen Position zu liegen kommt. Bekannt ist es auch, dass mit zwei Revolverköpfen gearbeitet wird, die dann eine entsprechende Zahl von Werkzeugen bereithalten. Zum Stand der Technik wird auf die DE 10 2004 004 498 A1 hingewiesen.

Die Zustellbewegungen zwischen dem rohrförmigen Werkstück und den Werkzeugen werden dabei in bekannter Weise numerisch gesteuert. Hierfür ist es erforderlich, dass im Falle eines während der spanenden Bearbeitung ruhenden rohrförmigen Werkstücks zunächst dieses in eine definierte Lage zur Maschine gebracht werden muss, bevor der Werkzeugvorschub aktiviert wird und die Bearbeitung des Rohrendes durch das jeweilige rotierende Werkzeug erfolgen kann. Analoges gilt, wenn das rohrförmige Werkstück rotiert und das stehende Werkzeug an das Rohr herangefahren wird.

Bei vorbekannten Werkzeugmaschinen der eingangs genannten Art ist es problematisch, dass - insbesondere bei der Innenbearbeitung des rohrförmigen Werkstücks - eine relativ große, ausreichende Ausspannlänge des Rohrs aus dem Spannsystem der Werkstückspindel erforderlich ist, um Störbereiche der stirnseitig benachbart angeordneten Werkzeuge im Revolverkopf zu vermeiden. Des weiteren ist in diesem Zusammenhang nachteilig, dass Ungenauigkeiten der Einspannung des Werkstücks in der Werkstückspindel sich sehr negativ auf die Bearbeitungsgenauigkeit auswirken.

In nachteiliger Weise bedingen eine nicht exakte Einspannlage des Endes des rohrförmigen Werkstücks und/oder eine größere Ausspannlänge des Werkstücks Bearbeitungsprobleme, beispielsweise in Form von Schwingungen. Die Bearbeitungsqualität ist daher in einem solchen Falle mangelhaft. Nachteilig ist weiterhin eine ungünstige Positionierung der Werkzeuge insbesondere bei der Innenbearbeitung des rohrförmigen Werkstücks; hier tritt das Problem der Störkanten in besonderer Weise zutage.

Der Erfindung liegt daher die Aufgabe zugrunde, eine Werkzeugmaschine der eingangs genannten Art so fortzubilden, dass die erläuterten Nachteile vermieden werden können. Es soll also eine Bearbeitung eines rohrförmigen Werkstücks mit zwei mehrere Werkzeuge tragenden Revolverköpfen möglich werden, die bei einer geringen Ausspannlänge des rohrförmigen Werkstücks aus der Werkstückspindel erfolgen kann, ohne Störkantenprobleme zwischen den Werkzeugen des Revolverkopfes zu haben.

Die Lösung dieser Aufgabe durch die Erfindung ist dadurch gekennzeichnet, dass die beiden Revolverköpfe oberhalb und unterhalb der Drehmitte der Werkstückspindel angeordnet sind und ihre Revolverdrehachsen bezogen auf die horizontale Drehachse vertikal ausgerichtet sind.

Die Werkzeuge der einander in Flucht gegenüberliegenden Revolverköpfe können im Revolverkopf ortsfest angeordnet sein. Die Revolverköpfe können relativ zur Werkstückspindel in Richtung der Drehachse und/oder in Richtung der Revolverachse zustellbar angeordnet sein.

Der Revolverkopf kann mehrere Werkzeuge aufweisen, die um den Umfang des Revolverkopfes gleichförmig verteilt angeordnet sind. Dabei sind bevorzugt zwischen vier und acht Werkzeuge um den Umfang des Revolverkopfes gleichförmig verteilt angeordnet.

Am Revolverkopf können Werkzeuge zur Bearbeitung des äußeren Umfangs und/oder der Stirnseite des rohrförmigen Werkstücks angeordnet sein; am Revolverkopf können auch Werkzeuge zur Bearbeitung des inneren Umfangs des rohrförmigen Werkstücks angeordnet sein. Ferner kann am Revolverkopf mindestens ein Werkzeug zur Drehbearbeitung des rohrförmigen Werkstücks angeordnet sein, ebenso mindestens ein Werkzeug zur Herstellung eines Außen- oder Innengewindes am rohrförmigen Werkstück.

Der Revolverkopf besteht dabei bevorzugt aus einer die Werkzeuge tragenden Werkzeug-Scheibe, die auf oder an einem Werkzeug-Kopf drehbar gelagert ist.

Durch die Erfindung lässt sich eine kurze Ausspannlänge des rohrförmigen Werkstücks aus der Werkstückspindel erreichen, wenn die Werkzeug- bzw. Revolverköpfe vertikal, auf die Drehmitte zu und von dieser weg anstellbar angeordnet sind. Indem der außerdem horizontal und vertikal verschiebbare Revolver- oder Werkzeugkopf vertikal angeordnet ist und dem Einspannfutter (Futter der Werkstückspindel) nicht mehr axial gegenüberliegt, kann die Außenbearbeitung durch zwei Revolverköpfe, die in der Regel mit mehreren Schneidwerkzeugen bestückt sind, gleichzeitig erfolgen, von denen zur Innenbearbeitung nur ein Revolverkopf zum Einsatz kommt, von dessen Werkzeugen eines in das Rohrende eintaucht.

Es liegt damit ein Werkzeug-System mit hoher Flexibilität vor. Die auf der Werkzeugscheibe vorzugsweise ortsfest angeordneten Werkzeugaufnahmen für die Werkzeuge ermöglichen kurze Abstände zur Drehmitte und geringe Höhen auf dem Werkzeugkopf, was günstige Krafteinleitungen der Schnittkräfte mit hoher Steifigkeit und damit guter Bearbeitungstechnologie ermöglicht. Bei einem Werkzeugkopf mit vorzugsweise sechs Werkzeugaufnahmen und Werkzeugen, die sich somit um 60° versetzt auf der Werkzeug-Scheibe bzw. dem Werkzeug-Kopf vorsehen lassen, können kurze Ausspannlängen verwirklicht werden, da Störbereiche der benachbarten Werkzeuge durch die sternförmige Anordnung radial auf der Werkzeug-Scheibe mit 60°-Versatz vermieden werden.

Die kurze Ausspannlänge ist insbesondere vorteilhaft bei der Bearbeitung dünnwandiger Rohre. Der Zerspanungsprozess wird daher mit den vorgeschlagenen Maßnahmen positiv beeinflusst.

In der Zeichnung ist ein Ausführungsbeispiel der Erfindung dargestellt. Es zeigen:
- Fig. 1: eine perspektivische Ansicht einer Werkzeugmaschine zur Bearbeitung eines rohrförmigen Werkstücks; und
- Fig. 2: einen Revolverkopf der Werkzeugmaschine im Eingriff mit dem rohrförmigen Werkstück in der Ansicht A gemäß Fig. 1.

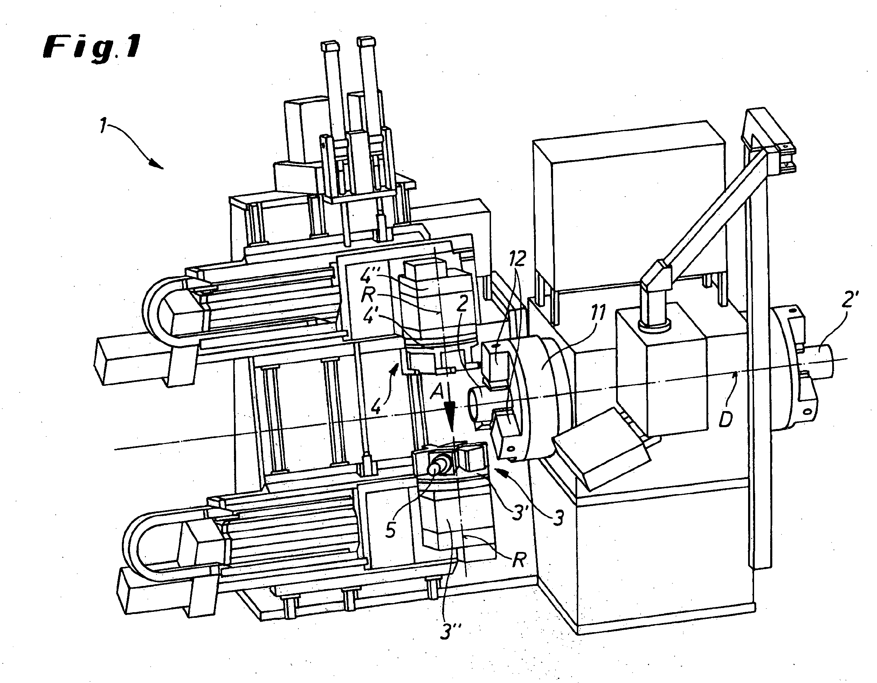

In Fig. 1 ist eine Werkzeugmaschine 1 in Form eines Bearbeitungszentrums gezeigt, die eine Werkstückspindel 11 aufweist, die um eine Drehachse D rotieren kann. Die Werkstückspindel 11 trägt ein rohrförmiges Werkstück 2, das in eine Bohrung in der Werkstückspindel 11 eingeschoben ist, d. h. das Werkstück 2 kann mit einem Ende 2' im hinteren Bereich aus der Werkstückspindel 11 herausragen. Im vorderen Bereich wird das Werkstück von Spannbacken 12 eines Futters konzentrisch zur Drehachse D gespannt.

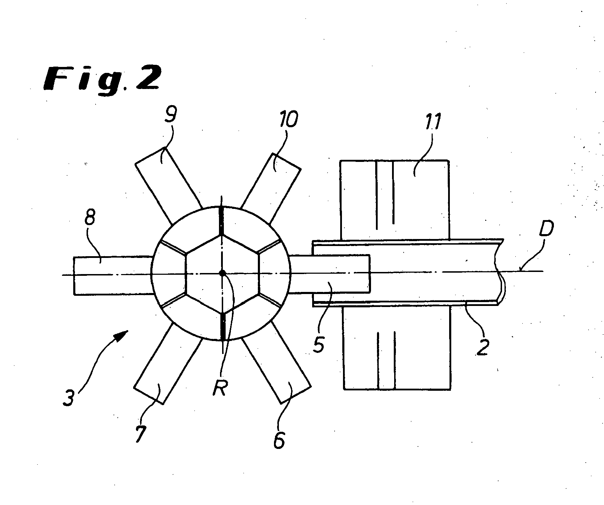

Die Bearbeitung des Endes des rohrförmigen Werkstücks 2 erfolgt durch Werkzeuge 5, 6, 7, 8, 9, 10 (s. Fig. 2), die in zwei Revolverköpfen 3 und 4 gespannt sind. Die beiden Revolverköpfe 3, 4 sind oberhalb und unterhalb der Drehmitte der Werkstückspindel angeordnet. Die Revolverköpfe 3, 4 bestehen jeweils aus einem Werkzeugkopf 3" bzw. 4" die eine Werkzeug-Scheibe 3' bzw. 4' tragen. Die Werkzeuge 5, 6, 7, 8, 9, 10 sind ortsfest an der Werkzeug-Scheibe 3', 4' angeordnet und können um eine Revolverdrehachse R drehen. Je nach der Drehposition der Werkzeug-Scheibe 3', 4' relativ zum Werkzeug-Kopf 3", 4" kann ein entsprechendes Werkzeug 5, 6, 7, 8, 9, 10 in Eingriff gebracht werden, d. h. durch translatorische Verschiebung in Richtung der Achsen D und R kann das Werkzeug an das Werkstück 2 herangefahren werden, um die Stirnseite des rohrförmigen Werkstücks sowie den äußeren und/oder den inneren Umfang desselben spanend zu bearbeiten. Hierunter ist auch die Einbringung eines Gewindes in das Ende des Werkstücks 2 zu verstehen. Die Revolverköpfe 3, 4 sind somit horizontal und vertikal verschiebbar auf entsprechenden Schlitten angeordnet, so dass die sich auf ihnen befindlichen Werkzeuge in Eingriff gefahren bzw. -bracht werden können.

Wesentlich ist, dass die Drehachse D des Werkstücks 2 bzw. der Werkstückspindel 11 und die Revolverdrehachse R senkrecht zueinander stehen, wie es sich der Fig. 2 noch einmal entnehmen läßt. Die Revolverdrehachse R steht hier senkrecht auf der Zeichenebene, die Werkstückdrehachse D liegt in der Zeichenebene. Aus Fig. 2 ist auch ersichtlich, dass am Revolverkopf 3 sechs sternförmig angeordnete Werkzeuge 5, 6, 7, 8, 9, 10 gleichförmig um den Umfang herum verteilt angeordnet sind; d. h. durch jeweilige Drehung des Revolverkopfs 3 um 60° kann ein anderes Werkzeug zum Einsatz gebracht werden.

Grundsätzlich möglich ist auch, dass die beiden Achsen D und R sich nicht schneiden, allerdings in der Vorderansicht der Maschine senkrecht aufeinander stehen.

In Fig. 2 ist die Innenbearbeitung des rohrförmigen Werkstücks 2 mittels des Werkzeugs 5 angedeutet. Aus dieser Figur wird auch deutlich, dass - anders als wenn die Werkzeuge 5, 6, 7, 8, 9, 10 in der Zeichnungsebene nach vorne vorkragend angeordnet wären - zwischen benachbarten Werkzeugen keine Störbereiche vorliegen.

Gut zu erkennen ist in Fig. 2 auch, dass das rohrförmige Werkstück 2 nur sehr kurz aus der Werkstückspindel 11 ausgespannt ist und so die Tendenz zur Anregung von störenden Schwingungen sehr gering bleibt.

Die Außenbearbeitung des rohrförmigen Werkstücks 2 kann durch beide Revolverköpfe 3, 4 gleichzeitig erfolgen, um die Bearbeitungszeiten zu reduzieren. Möglich ist es ferner, parallel zur Innenbearbeitung mittels eines Revolverkopfs zeitlich parallel mit dem anderen Revolverkopf eine Außenbearbeitung vorzunehmen.

### Bezugszeichenliste:

- 1: Werkzeugmaschine
- 2: Werkstück
- 2': hinteres Ende des Werkstücks
- 3: Revolverkopf
- 3': Werkzeug-Scheibe
- 3": Werkzeug-Kopf
- 4: Revolverkopf
- 4': Werkzeug-Scheibe
- 4": Werkzeug-Kopf
- 5: Werkzeug
- 6: Werkzeug
- 7: Werkzeug
- 8: Werkzeug
- 9: Werkzeug
- 10: Werkzeug
- 11: Werkstückspindel
- 12: Spannbacken

- D: Drehachse des Werkstücks
- R: Revolverdrehachse

## Patentansprüche

1. Werkzeugmaschine (1), die eine drehangetriebene Werkstückspindel (11) aufweist, die ein rohrförmiges Werkstück (2) spannen kann, und zur Bearbeitung des rohrförmigen Werkstücks (2) zwei Revolverköpfe (3, 4) aufweist, wobei das rohrförmige Werkstück (2) um eine Drehachse (D) rotieren kann, wobei die Revolverköpfe (3, 4) mit mindestens zwei Werkzeugen (5, 6, 7, 8, 9, 10) bestückbar sind, wobei die Revolverköpfe (3, 4) zur Positionierung eines Werkzeugs (5, 6, 7, 8, 9, 10) in eine Arbeitsposition um eine Revolverdrehachse (R) drehbar sind und wobei die Drehachse (D) und die Revolverdrehachse (R) senkrecht zueinander stehen,
**dadurch gekennzeichnet,**
**dass** die beiden Revolverköpfe (3, 4) oberhalb und unterhalb der Drehmitte der Werkzeugspindel (11) angeordnet sind und ihre Revolverdrehachsen (R) bezogen auf die horizontale Drehachse (D) vertikal ausgerichtet sind.

2. Werkzeugmaschine nach Anspruch 1, **dadurch gekennzeichnet, dass** die Werkzeuge (5, 6, 7, 8, 9, 10) im Revolverkopf (3, 4) ortsfest angeordnet sind.

3. Werkzeugmaschine nach Anspruch 1 oder 2, **dadurch gekennzeichnet, dass** der Revolverkopf (3, 4) relativ zur Werkstückspindel (11) in Richtung der Drehachse (D) zustellbar angeordnet ist.

4. Werkzeugmaschine nach einem der Ansprüche 1 bis 3, **dadurch gekennzeichnet, dass** der Revolverkopf (3, 4) relativ zur Werkstückspindel (11) in Richtung der Revolverachse (R) zustellbar angeordnet ist.

5. Werkzeugmaschine nach einem der Ansprüche 1 bis 4, **dadurch gekennzeichnet, dass** der Revolverkopf (3, 4) mehrere Werkzeuge (5, 6, 7, 8, 9, 10) aufweist, die um den Umfang des Revolverkopf (3, 4) gleichförmig verteilt angeordnet sind.

6. Werkzeugmaschine nach Anspruch 5, **dadurch gekennzeichnet, dass** zwischen vier und acht Werkzeuge (5, 6, 7, 8, 9, 10) um den Umfang des Revolverkopf (3, 4) gleichförmig verteilt angeordnet sind.

7. Werkzeugmaschine nach einem der Ansprüche 1 bis 6, **dadurch gekennzeichnet, dass** am Revolverkopf (3, 4) Werkzeuge (5, 6, 7, 8, 9, 10) zur Bearbeitung des äußeren Umfangs und/oder der Stirnseite des rohrförmigen Werkstücks (2) angeordnet sind.

8. Werkzeugmaschine nach einem der Ansprüche 1 bis 7, **dadurch gekennzeichnet, dass** am Revolverkopf (3, 4) Werkzeuge (5, 6, 7, 8, 9, 10) zur Bearbeitung des inneren Umfangs des rohrförmigen Werkstücks (2) angeordnet sind.

9. Werkzeugmaschine nach Anspruch 7 oder 8, **dadurch gekennzeichnet, dass** am Revolverkopf (3, 4) mindestens ein Werkzeug (5, 6, 7, 8, 9, 10) zur Drehbearbeitung des rohrförmigen Werkstücks (2) angeordnet ist.

10. Werkzeugmaschine nach Anspruch 7 oder 8, **dadurch gekennzeichnet, dass** am Revolverkopf (3, 4) mindestens ein Werkzeug (5, 6, 7, 8, 9, 10) zur Herstellung eines Außen- oder Innengewindes am rohrförmigen Werkstück (2) angeordnet ist.

11. Werkzeugmaschine nach einem der Ansprüche 1 bis 10, **dadurch gekennzeichnet, dass** der Revolverkopf (3, 4) aus einer die Werkzeuge (5, 6, 7, 8, 9, 10) tragenden Werkzeug-Scheibe (3', 4') besteht, die auf oder an einem Werkzeug-Kopf (3", 4") drehbar gelagert ist.

## Claims

1. A machine tool (1) featuring a rotationally driven tool spindle (11) that can clamp a tubular workpiece (2), as well as two turrets (3, 4) for processing the tubular workpiece (2), wherein the tubular workpiece (2) can rotate about a rotational axis (D), wherein the turrets (3, 4) can be fitted with at least two tools (5, 6, 7, 8, 9, 10), wherein the turrets (3, 4) can be rotated into a working position about a rotational turret axis (R) in order to position a tool (5, 6, 7, 8, 9, 10), and wherein the rotational axis (D) and the rotational turret axis (R) extend perpendicular to one another,
**characterized in**
**that** the two turrets (3, 4) are arranged above or underneath the rotational center of the tool spindle (11) and their rotational turret axes (R) are aligned vertically referred to the horizontal rotational axis (D).

2. The machine tool according to claim 1, **characterized in that** the tools (5, 6, 7, 8, 9, 10) are stationarily arranged in the turret (3, 4).

3. The machine tool according to claim 1 or 2, **characterized in that** the turret (3, 4) is arranged such that it can be adjusted relative to the tool spindle (11) in the direction of the rotational axis (D).

4. The machine tool according to one of claims 1-3, **characterized in that** the turret (3, 4) is arranged such that it can be adjusted relative to the tool spindle (11) in the direction of the turret axis (R).

5. The machine tool according to one of claims 1-4, **characterized in that** the turret (3, 4) features several tools (5, 6, 7, 8, 9, 10) that are arranged in a uniformly distributed fashion over the circumference of the turret (3, 4).

6. The machine tool according to claim 5, **characterized in that** between four and eight tools (5, 6, 7, 8, 9, 10) are arranged in a uniformly distributed fashion over the circumference of the turret (3, 4).

7. The machine tool according to one of claims 1-6, **characterized in that** tools (5, 6, 7, 8, 9, 10) for processing the outer circumference and/or the end face of the tubular workpiece (2) are arranged on the turret (3, 4).

8. The machine tool according to one of claims 1-7, **characterized in that** tools (5, 6, 7, 8, 9, 10) for processing the inner circumference of the tubular workpiece (2) are arranged on the turret (3, 4).

9. The machine tool according to claim 7 or 8, **characterized in that** at least one tool (5, 6, 7, 8, 9, 10) for rotationally processing the tubular workpiece (2) is arranged on the turret (3, 4).

10. The machine tool according to claim 7 or 8, **characterized in that** at least one tool (5, 6, 7, 8, 9, 10) for producing an external or internal thread on the tubular workpiece (2) is arranged on the turret (3, 4).

11. The machine tool according to one of claims 1-10, **characterized in that** the turret (3, 4) consists of a tool disc (3', 4') that carries the tools (5, 6, 7, 8, 9, 10) and is rotatably supported upon or on a tool head (3", 4").

## Revendications

1. Machine-outil (1) qui présente une broche de pièce (11) entraînée en rotation qui peut serrer une pièce tubulaire (2) et présente deux tourelles (3, 4) pour usiner la pièce tubulaire (2), sachant que la pièce tubulaire (2) peut tourner sur un axe de rotation (D), sachant que les tourelles (3, 4) peuvent être dotées d'au moins deux outils (5, 6, 7, 8, 9, 10), sachant que les tourelles (3, 4) peuvent tourner sur un axe de rotation revolver (R) pour positionner un outil (5, 6, 7, 8, 9, 10) dans une position de travail, et sachant que l'axe de rotation (D) et l'axe de rotation revolver (R) sont perpendiculaires entre eux,
**caractérisé en ce que**
les deux tourelles (3, 4) sont disposées au-dessus et en-dessous du centre de rotation de la broche de pièce (11) et leurs axes de rotation revolver (R) sont alignés verticalement par rapport à l'axe de rotation horizontal (D).

2. Machine-outil selon la revendication 1, **caractérisé en ce que** les outils (5, 6, 7, 8, 9, 10) sont disposés en position fixe dans la tourelle (3, 4).

3. Machine-outil selon la revendication 1 ou 2, **caractérisé en ce que** la tourelle (3, 4) est disposée réglable en direction de l'axe de rotation (D) par rapport à la broche de pièce (11).

4. Machine-outil selon l'une des revendications 1 à 3, **caractérisé en ce que** la tourelle (3, 4) est disposée réglable en direction de l'axe de rotation revolver (R) par rapport à la broche de pièce (11).

5. Machine-outil selon l'une des revendications 1 à 4, **caractérisé en ce que** la tourelle (3, 4) présente plusieurs outils (5, 6, 7, 8, 9, 10) qui sont disposés répartis uniformément sur le pourtour de la tourelle (3, 4).

6. Machine-outil selon la revendication 5, **caractérisé en ce qu'**entre quatre et huit outils (5, 6, 7, 8, 9, 10) sont disposés répartis uniformément sur le pourtour de la tourelle (3, 4).

7. Machine-outil selon l'une des revendications 1 à 6, **caractérisé en ce que** des outils (5, 6, 7, 8, 9, 10) sont disposés sur la tourelle (3, 4) pour usiner le pourtour extérieur et/ou la face avant de la pièce tubulaire (2).

8. Machine-outil selon l'une des revendications 1 à 7, **caractérisé en ce que** des outils (5, 6, 7, 8, 9, 10) sont disposés sur la tourelle (3, 4) pour usiner le pourtour intérieur de la pièce tubulaire (2).

9. Machine-outil selon la revendication 7 ou 8, **caractérisé en ce qu'**au moins un outil (5, 6, 7, 8, 9, 10) est disposé sur la tourelle (3, 4) pour le tournage de la pièce tubulaire (2).

10. Machine-outil selon l'une la revendication 7 ou 8, **caractérisé en ce qu'**au moins un outil (5, 6, 7, 8, 9, 10) est disposé sur la tourelle (3, 4) pour fabriquer un filet mâle ou femelle sur la pièce tubulaire (2).

11. Machine-outil selon l'une des revendications 1 à 10, **caractérisé en ce que** la tourelle (3, 4) est composée d'un disque-outil (3', 4') portant les outils (5, 6, 7, 8, 9, 10), qui est positionné en rotation sur ou contre une tête d'outil (3", 4").
